# NEUE EUROPÄISCHE PATENTSCHRIFT

(11) **EP 0 680 859 B2**
(45) Veröffentlichungstag und Bekanntmachung des Hinweises auf die Entscheidung über den Einspruch: **28.09.2005**
(45) Hinweis auf die Patenterteilung: 29.05.2002
(21) Anmeldenummer: 95104562.4
(22) Anmeldetag: 28.03.1995
(51) Int. Cl.: B60R 25/04, B60R 25/10

(54) **System zur Sicherung eines Fahrzeugs gegen unberechtigte Benutzung**
System for protecting a vehicle against unauthorized use
Système pour la protection d'un véhicule contre l'utilisation non-autorisée

(30) Priorität: 29.04.1994 DE 4415052
(43) Veröffentlichungstag der Anmeldung: 08.11.1995
(73) Patentinhaber: T-Mobile Deutschland GmbH, 53227 Bonn (DE)
(72) Erfinder: Fleck, Gerhard, D-53340 Meckenheim (DE)
(74) Vertreter: Riebling, Peter

(56) Entgegenhaltungen:
- EP-A- 0 218 251
- EP-A- 0 242 099
- EP-A- 0 574 230
- WO-A-91/09754
- WO-A-93/16452
- WO-A-93/17895
- DE-A- 2 029 417
- DE-A- 2 747 388
- DE-A- 3 908 029
- DE-A- 4 239 271
- DE-A- 4 320 174
- DE-C- 3 313 481
- DE-C- 3 918 052
- DE-C- 4 016 142
- DE-C- 4 240 458
- DE-C- 4 243 415
- GB-A- 2 266 747
- US-A- 3 624 608
- US-A- 4 023 138
- US-A- 5 276 728

## Beschreibung

Die Erfindung betrifft ein System zur Sicherung eines Fahrzeugs gegen unberechtigte Benutzung.

Mit zunehmender Zahl von Kraftfahrzeugdiebstählen sind viele Sicherungssysteme für Kraftfahrzeuge vorgeschlagen worden. Außer mechanischen Vorrichtungen sind ferner unter Bezeichnungen wie "Immobilizer" und "Wegfahrsicherung" elektrische Einrichtungen bekanntgeworden, bei denen verschiedene für die Benutzung des Kraftfahrzeugs wichtige Funktionen ohne die Freigabe mit einem Schlüssel blockiert werden. Diese Systeme weisen jedoch den Nachteil auf, daß kein wirksamer Schutz besteht, wenn die unberechtigte Benutzung mit einem gestohlenen Fahrzeugschlüssel erfolgt. Ferner kann bei den bekannten Systemen ein durch Manipulationen trotz der Sicherungseinrichtungen in Betrieb genommenes Fahrzeug in ein Versteck gebracht werden, wo die Sicherungseinrichtungen entfernt werden können, so daß es als ungesichertes Fahrzeug gegebenenfalls weit entfernt vom Diebstahlsort verkauft werden kann.

Die US-A-5 276 728 offenbart gemäß dem Oberbegriff des Anspruchs 1 ein System zur Sicherung eines Fahrzeugs, bestehend aus einer Überwachungseinrichtung die ein Empfangsgerät für ein Mobilfunknetz und eine Steuerungseinheit aufweist. Die Überwachungseinrichtung ist mit mindestens einer für den Betrieb des Fahrzeugs erforderlichen Fahrzeugeinrichtung, z.B. Zündung, derart verbunden, daß die Funktion der Fahrzeugeinrichtung durch die Überwachungseinrichtung blockierbar ist. Sobald der Fahrzeughalter sein Fahrzeug als gestohlen bemerkt, kann er telefonisch einen dem Fahrzeug zugeordneten Blokkierungscode an das Mobilfunknetz weitergeben, welcher darauf im Mobilfunknetz ausgestrahlt wird. Wird der entsprechende Blockierungscode vom gestohlen Fahrzeug empfangen, veranlasst die Überwachungseinrichtung ein Blockieren der Fahrzeugeinrichtung auch während des Fahrbetriebes.

Die DE-C-42 43 415 beschreibt, ein Alarmsystem für bewegliche Güter, insbesondere Fahrzeuge, wobei im Fahrzeug ein Steuergerät mit einem Sende/Empfangsgerät für ein Mobilfunknetz angeordnet ist, das mit einer Signaleinrichtung der Fahrzeuges, z.B. der Hupe, und mindestens einer für den Betrieb des Fahrzeugs erforderlichen Fahrzeugeinrichtung, z.B. der Zündung, derart verbunden ist, daß die Funktion der Fahrzeugeinrichtung durch das Steuergerät blockierbar ist. Die Steuereinrichtung ist ferner mit Sensoren verbunden, die bei Diebstahl der Fahrzeuges ansprechen, wobei die Signaleinrichtung aktiviert wird. Gleichzeitig werden die Fahrzeugdaten mittels der Sende/Empfangseinrichtung an eine Zentralstelle gesendet, dort ausgewertet und der Fahrzeughalter und andere Instanzen über den Diebstahl informiert. Über die Zentrale kann nun ein Verriegelungscode an das Steuergerät gesendet werden, wodurch die Funktion der Fahrzeugeinrichtung blockiert wird.

Eine Vorrichtung zum Schutz von Kraftfahrzeugen und darin befindlichen elektronischen Geräten vor Diebstahl ist in der DE-C-42 40 458 offenbart. Im Zündschlüssel des Kraftfahrzeuges ist ein Code-Sender integriert, der periodisch Signale aussendet, die von einem Code-Empfänger in einem zu schützenden Gerät empfangen und ausgewertet werden. Bei fehlendem oderfehlerhaften Code-Signal wird ein Alarm ausgelöst.

Die DE 3 908 025 A1 offenbart eine Wegfahrsperre, die vor Fahrtantritt ein Freigabesignal benötigt.

Aufgabe der vorliegenden Erfindung ist es, ein System zur Sicherung eines Fahrzeugs gegen unberechtigte Benutzung anzugeben, bei welchem auch nach dem Beginn der unberechtigten Benutzung eine Einflußnahme des Fahrzeughalters möglich ist.

Diese Aufgabe wird erfindungsgemäß durch die im Anspruch 1 angegebenen Merkmale gelöst.

Die Erfindung beruht darauf, daß die Überwachungseinrichtung von Zeit zu Zeit eine Meldung über das Mobilfunknetz an eine Zentralstelle sendet und die Funktion der Fahrzeugeinrichtung blockiert, wenn keine Rückmeldung empfangen wird.

Der Vorteil des erfindungsgemäßen Systems besteht darin, daß der Betrieb des Fahrzeugs von der Zentralstelle aus blockiert werden kann, auch wenn beispielsweise der Fahrzeugschlüssel gestohlen wurde. Obwohl zu Zwecken des erfindungsgemäßen Systems grundsätzlich die Nutzung beliebiger Mobilfunknetze möglich ist, ist die Verwendung von zellular aufgebauten Mobilfunknetzen, wie beispielsweise nach dem GSM-Standard, besonders vorteilhaft. Für die Übertragung der Meldung und der Rückmeldung stehen verschiedene Kanäle bzw. Dienste innerhalb des GSM-Standards zur Verfügung.

Eine Weiterbildung des erfindungsgemäßen Systems besteht darin, daß die Blockierung erfolgt, wenn nach einer bestimmten Anzahl von Betriebsereignissen des Fahrzeugs keine Rückmeldung empfangen worden ist. Vorzugsweise ist dabei vorgesehen, daß ein Betriebsereignis mindestens eines der folgenden Ereignisse ist: Motorstarten, Türöffnen, Tanken, Fahren einer vorgegebenen Strecke.

Diese Weiterbildung verhindert, daß das Fahrzeug bereits stehenbleibt, wenn eine oder wenige Meldungen nicht durch eine Rückmeldung beanwortet werden. Die erlaubte Anzahl von Betriebsereignissen ohne Rückmeldung muß so groß sein, daß das Fahrzeug einen Funkschatten ohne Blockierung durchfahren kann, jedoch klein genug, damit eine baldige Blockierung des Fahrzeugs nach einem Diebstahl gesichert ist.

Eine vorteilhafte Ausgestaltung des erfindungsgemäßen Systems besteht darin, daß die Meldungen der Überwachungseinrichtung Informationen über den das erfindungsgemäße System benutzenden Teilnehmer (Dienstteilnehmer) aufweisen, wobei die Informationen in einem Schlüssel gespeichert sind, der zum Betrieb des Fahrzeugs erforderlich ist. Dabei kann der Schlüssel mit dem für das Fahrzeug an sich vorgesehenen Schlüssel (Zündschlüssel) vereint sein. Es kann jedoch auch ein Schlüssel in Form einer Chipkarte für das erfindungsgemäße System vorgesehen sein.

Eine andere Weiterbildung des erfindungsgemäßen Systems besteht darin, daß das Senden einer Rückmeldung durch die Zentralstelle für jeweils ein Fahrzeug unterbunden werden kann. Hierdurch ist es möglich, daß ein Fahrzeugbesitzer, der an dem mit dem erfindungsgemäßen System eingerichteten Dienst teilnimmt, - im folgenden Dienstteilnehmer genannt - und dem das Fahrzeug gegebenenfalls auch mit Schlüssel gestohlen worden ist, die Zentralstelle telefonisch benachrichtigt und unter Angabe seiner Teilnehmernummer und einer Geheimnummer eine Blockierung des Fahrzeugs in Auftrag gibt. Die Zentralstelle wird dann keine Rückmeldungen für dieses Fahrzeug mehr senden, so daß es nach einer vorbestimmten Anzahl von Betriebsereignissen stehenbleibt.

Gemäß einer anderen Weiterbildung ist vorgesehen, daß die Fahrzeugeinrichtung ferner durch die Überwachungseinrichtung blockierbar ist, wenn eine von der Zentralstelle gesendete Blockiermeldung empfangen wird. Hierdurch wird eine Blockierung des Fahrzeugs durch die Zentralstelle möglich, ohne daß zuvor eine Meldung vom Fahrzeug ausgehend empfangen wurde.

Eine Manipulation durch Simulierung einer von der Zentralstelle ausgehenden Rückmeldung kann gemäß einer anderen Weiterbildung dadurch vermieden werden, daß die Meldung eine wechselnde Teilnehmernummer enthält, die der Überwachungseinrichtung im Rahmen einer vorangegangenen Rückmeldung mitgeteilt wurde.

Für den Fall, daß sich ein mit dem erfindungsgemäßen System ausgerüstetes Fahrzeug in einem Gebiet ohne Versorgung durch das Mobilfunknetz befindet, ist gemäß einer vorteilhaften Ausführungsform vorgesehen, daß die Blockierung durch Eingabe einer Geheimnummer aufhebbar ist.

Wird bei dem erfindungsgemäßen System die zum Senden und Empfangen erforderliche Antenne beschädigt oder entfernt, können keine Meldungen gesendet und Rückmeldungen empfangen werden. Damit würde das Fahrzeug blockiert werden. Um dieses weitgehend zu verhindern, kann durch eine Weiterbildung der Erfindung vorgesehen sein, daß zum Senden und Empfangen eine Scheibenantenne, insbesondere eine in die Windschutzscheibe integrierte Antenne, verwendet wird.

Eine Unwirksamkeit des erfindungsgemäßen Systems im Fahrzeug kann vorzugsweise dadurch verhindert werden, daß die Überwachungseinrichtung derart mit der Fahrzeugeinrichtung verbunden ist, daß eine elektrische Trennung zum Blockieren der Fahrzeugeinrichtung führt. Außerdem wird die Sicherheit gegenüber Manipulationen dadurch erhöht, daß mehrere Fahrzeugeinrichtungen von der Freigabe durch die Überwachungseinrichtung abhängig sind.

Die Benutzung des Mobilfunknetzes für das erfindungsgemäße System hat ferner den Vorteil, daß die Position des Fahrzeugs ermittelt werden kann. Dieses ist durch die Verfahren zum Verbindungsaufbau (Routing) des Mobilfunknetzes, insbesondere nach dem GSM-Standard, mit einer Genauigkeit eines Gebietes einer Zelle möglich. Für den Fall, daß zum Zeitpunkt der Ermittlung der Position vom Fahrzeug keine Meldungen mehr ausgehen, ist gemäß einer Weiterbildung der Erfindung vorgesehen, daß die jeweils letzte Position des Fahrzeugs, die durch ursprungsabhängiges Routing des Mobilfunknetzes ermittelt wurde, gespeichert wird und abrufbar ist.

Nur mit äußerst geringem Mehraufwand kann das erfindungsgemäße System dadurch weitergebildet werden, daß nach einer geeigneten Eingabe eine Notrufmeldung von der Überwachungseinrichtung über das Mobilfunknetz gesendet wird.

Ein besonderer Vorteil des erfindungsgemäßen Systems besteht in einer Aufrüstbarkeit mit weiteren Mobilfunkdiensten, wie beispielsweise Verkehrsinformation, Verkehrslenkung, mobilem Telefon und mobilem Telefax.

Ein Ausführungsbeispiel der Erfindung ist in der Zeichnung anhand mehrerer Figuren dargestellt und in der nachfolgenden Beschreibung näher erläutert. Es zeigt:
- Fig. 1: ein Ausführungsbeispiel eines erfindungsgemäßen Systems in schematischer Darstellung und
- Fig. 2: ein Blockschaltbild von den im Fahrzeug befindlichen Teilen des erfindungsgemäßen Systems.

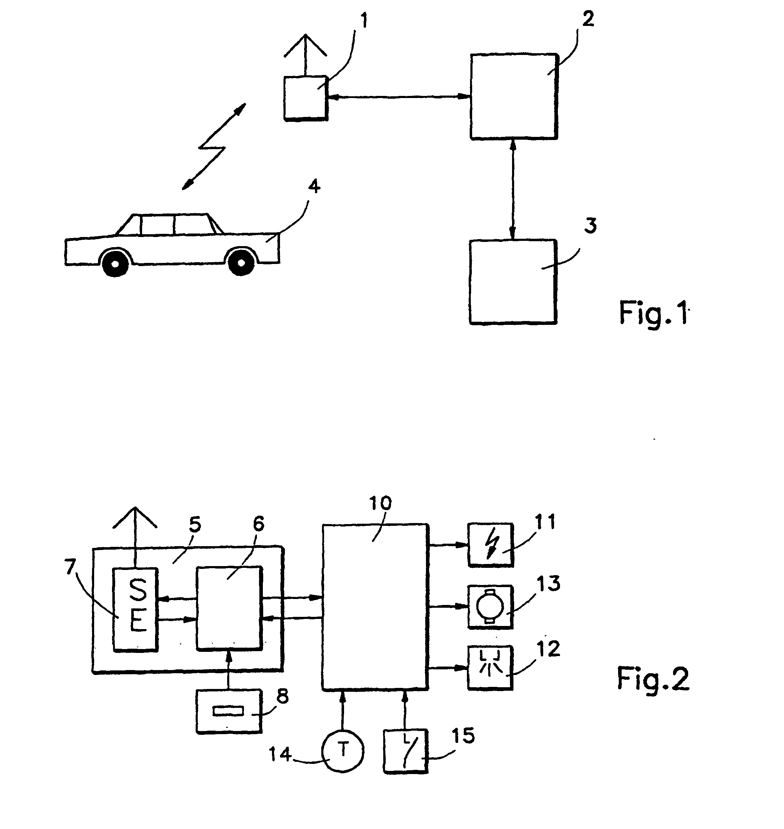

In Fig. 1 sind stellvertretend für die an sich bekannten Komponenten des Mobilfunknetzes lediglich eine Basisstation 1 und eine Mobilvermittlungsstelle 2 dargestellt. Das Mobilfunknetz ist mit einer Zentralstelle 3 verbunden, die im wesentlichen aus einem Rechner mit im einzelnen nicht dargestellten Ein- und AusgabeEinrichtungen, mit Speichern und mit Datenübertragungseinrichtungen vom und zum Mobilfunknetz versehen ist. In einem Fahrzeug 4 befindet sich eine Überwachungseinrichtung, die im folgenden anhand von Fig. 2 näher erläutert wird.

Die Überwachungseinrichtung 5 enthält einen Prozessor 6 und eine Sende/Empfangseinrichtung 7 mit allen Funktionalitäten, die zum Aufbau von Verbindungen und zur Übertragung von Daten über das Mobilfunknetz erforderlich sind. Diese sind insbesondere die Fähigkeit des Synchronisierens mit einer Basisstation, die Auswahl eines freien Kanals, der probehalber Empfang von Nachbarbasisstationen und gegebenenfalls ein sogenanntes Hand-over zu einer der Nachbarbasisstationen. Weitere Funktionen sind im GSM-Standard festgelegt. Dem Prozessor 6 ist eine Lesestation 8 zugeordnet, in welche ein Schlüssel mit einem Identifikationscode einführbar ist, dessen Zuteilung Voraussetzung zur Teilnahme an dem durch das erfindungsgemäße System gebildeten Dienst ist.

Als Fahrzeugeinrichtung dient bei dem dargestellten Ausführungsbeispiel ein Fahrzeug-Computer 10, der in an sich bekannter Weise Steuersignale für die Zündung 11, die Kraftstoffeinspritzung 12 und für eine Kraftstoffpumpe 13 erzeugt. Der Fahrzeug-Computer 10 erhält eine Reihe von Steuersignalen, die über geeignete Eingänge zuführbar sind. Von diesen sind beispielsweise Impulse eines Tachometers 14 und beim Starten des Motors erzeugte Impulse (Schalter 15) für das erfindungsgemäße System von Bedeutung und werden vom Fahrzeug-Computer 10 zum Prozessor 6 der Überwachungseinrichtung 5 weitergeleitet. Der Fahrzeug-Computer 10 erhält ferner vom Prozessor 6 Signale, bei deren Ausbleiben Funktionen, wie Zündung, Kraftstoffzufuhr und Kraftstoffeinspritzung, blokkiert werden.

Während des Betriebs des Fahrzeugs werden im Prozessor 6 Meldungen erzeugt und über die Sende/Empfangs-Einrichtung 7 ausgestrahlt. Eine solche Meldung enthält insbesondere folgende Informationen:
- Meldung-ID zur Kennzeichnung des Typs dieser Meldung,
- eine Fahrzeug-Identifikation,
- Authentifikationscode des Fahrzeugs,
- temporäre Teilnehmernummer.

Nach dem Eintreffen dieser Meldung bei der Zentralstelle 3 wird zur Überwachungseinrichtung 5 im Fahrzeug folgende Rückmeldung übertragen:
- Meldung-ID zur Kennzeichnung der Art der Meldung,
- Authentifikationscode der Zentralstelle,
- Anzahl der Betriebsereignisse,
- neue temporäre Teilnehmernummer.

Die Anzahl der Betriebsereignisse (Events) kann von Fahrzeug zu Fahrzeug sehr unterschiedlich sein. Einerseits soll diese Zahl so groß sein, daß ein Fahrzeug nicht in einem Funkschatten gesperrt wird, ein gestohlenes Fahrzeug jedoch möglichst schnell blokkiert wird. Dabei kann außer der Zahl der gefahrenen Kilometer das Starten des Motors und/oder das Öffnen der Fahrertür berücksichtigt werden. So kann beispielsweise ein Event alle fünf gefahrene Kilometer auftreten, während das Starten des Motors zwei Events und das Öffnen der Fahrertür ebenfalls zwei Events entspricht. Für jedes Fahrzeug kann ein derartiges Event-Modell in der Zentralstelle gespeichert und innerhalb der Rückmeldungen an das Fahrzeug übertragen werden. Beijeder Meldung vom Fahrzeug zur Zentralstelle werden genug Events geladen, um E(max) zu erreichen. Wenn die Anzahl der übrigen Events weniger als E(min) wird, meldet sich das Fahrzeug bei der Zentralstelle, um weitere Events nachzuladen.

Meldet sich im Falle eines Diebstahls der Besitzer des Fahrzeugs bei der Zentralstelle und weist sich in geeigneter Weise, beispielsweise durch Nennung der Fahrzeug-ID und einer Geheimnummer aus, kann in der Zentralstelle mindestens die Rückmeldung gesperrt werden. Zusätzlich kann an die Überwachungseinrichtung 5 eine Meldung zum Blockieren des Fahrzeugs gesendet werden, welche aus dem Meldung-ID, in diesem Fall die Information, daß es sich um eine Blockiermeldung handelt, und dem Authentifikationscode der Zentralstelle besteht.

Mobilfunknetze wie die derzeitigen digitalen Mobilfunknetze nach dem GSM-Standard weisen verschiedene Datendienste auf, die zur Übertragung des erfindungsgemäßen Systems geeignet sind. Vorzugsweise ist davon der Short Message Service (SMS) geeignet, da dieser besonders zur Übertragung kleiner Datenmengen pro Verbindung ausgelegt ist. Auch ist gleichzeitiges Telefonieren bei der Benutzung dieses Dienstes möglich, wenn die Mobilstation dafür ausgebildet ist.

## Patentansprüche

1. System zur Sicherung eines Fahrzeugs während des Fahrbetriebes gegen unberechtigte Benutzung, wobei im Fahrzeug (4) eine Überwachungseinrichtung (5) mit einem Sende/Empfangsgerät (7) für ein Mobilfunknetz (1, 2) und einem Prozessor (6) angeordnet ist, die mit mindestens einerfür den Betrieb des Fahrzeugs (4) erforderlichen Fahrzeugeinrichtung (10 bis 13), insbesondere Zündung, Kraftstoffpumpe, Anlasser, derart verbunden ist, daß die Funktion der Fahrzeugeinrichtung (10 bis 13) durch die Überwachungseinrichtung (5) blockierbar ist,
**dadurch gekennzeichnet,**
**daß** die Überwachungseinrichtung (5) während des Fahrbetriebes von Zeit zu Zeit eine Meldung über das Mobilfunknetz (1, 2) an eine Zentralstelle (3) sendet und die Funktion der Fahrzeugeinrichtung (10 bis 13) blockiert, wenn keine Rückmeldung empfangen wird, wobei die Meldungen der Überwachungseinrichtung (5) Informationen über einen das System benutzenden Teilnehmer aufweisen und die Informationen in einem Schlüssel gespeichert sind, der zum Betrieb des Fahrzeugs erforderlich ist.

2. System nach Anspruch 1, **dadurch gekennzeichnet, daß** die Blockierung erfolgt, wenn nach einer bestimmten Anzahl von Betriebsereignissen des Fahrzeugs (4) keine Rückmeldung empfangen worden ist.

3. System nach Anspruch 2, **dadurch gekennzeichnet, daß** ein Betriebsereignis mindestens eines der folgenden Ereignisse ist: Motorstarten, Türöffnen, Tanken, Fahren einer vorgegebenen Strecke.

4. System nach einem der vorhergehenden Ansprüche, **dadurch gekennzeichnet, daß** das Senden einer Rückmeldung durch die Zentralstelle (3) für jeweils ein Fahrzeug (4) unterbunden werden kann.

5. System nach einem der vorhergehenden Ansprüche, **dadurch gekennzeichnet, daß** die Fahrzeugeinrichtung (10 bis 13) ferner durch die Überwachungseinrichtung (5) blockierbar ist, wenn eine von der Zentralstelle (3) gesendete Blockiermeldung empfangen wird.

6. System nach einem der vorhergehenden Ansprüche, **dadurch gekennzeichnet, daß** die Meldung eine wechselnde Teilnehmernummer enthält, die der Überwachungseinrichtung (5) im Rahmen einer vorangegangenen Rückmeldung mitgeteilt wurde.

7. System nach einem der vorhergehenden Ansprüche, **dadurch gekennzeichnet, daß** die Blockierung durch Eingabe einer Geheimnummer aufhebbar ist.

8. System nach einem der vorhergehenden Ansprüche, **dadurch gekennzeichnet, daß** zum Senden und Empfangen eine Scheibenantenne, insbesondere eine in die Windschutzscheibe integrierte Antenne, verwendet wird.

9. System nach einem der vorhergehenden Ansprüche, **dadurch gekennzeichnet, daß** die überwachungseinrichtung (5) derart mit der Fahrzeugeinrichtung (10 bis 13) verbunden ist, daß eine elektrische Trennung zum Blockieren der Fahrzeugeinrichtung (10 bis 13) führt.

10. System nach einem der vorhergehenden Ansprüche, **dadurch gekennzeichnet, daß** die jeweils letzte Position des Fahrzeugs (4), die durch ursprungsabhängiges Routing des Mobilfunknetzes (1, 2) ermittelt wurde, gespeichert wird und abrufbar ist.

11. System nach einem der vorhergehenden Ansprüche, **dadurch gekennzeichnet, daß** nach einer geeigneten Eingabe eine Notrufmeldung von der Überwachungseinrichtung (5) über das Mobilfunknetz (1, 2) gesendet wird.

12. System nach einem der vorhergehenden Ansprüche, **gekennzeichnet durch** eine Aufrüstbarkeit mit weiteren Mobilfunkdiensten, wie beispielsweise Verkehrsinformation, Verkehrslenkung, mobilem Telefon und mobilem Telefax.

## Claims

1. System for securing a vehicle against unauthorized use during drive operation, wherein a supervisory apparatus (5) with a transceiver (7) for a mobile radio network (1, 2) and a processor (6)is arranged in the vehicle (4) and is connected to at least one vehicle apparatus (10 to 13) necessary for operation of the vehicle (4), in particular ignition, fuel pump, starter, so that the function of the vehicle apparatus (10 to 13) can be disabled by the supervisory apparatus (5), **characterized in that** from time to time during drive operation the supervisory apparatus (5) transmits a message over the mobile radio network (1, 2) to a control centre (3) and disables the function of the vehicle apparatus (10 to 13) if no acknowledgement 5 received, the messages from the supervisory apparatus (5) comprising information on a subscriber using the system, and the information being stored in a key which is necessary for the operation of the vehicle.

2. System according to Claim 1, **characterized in that** disabling occurs if no acknowledgement has been received after a specified number of operating events of the vehicle (4).

3. System according to Claim 2, **characterized in that** an operating event is at least one of the following events: starting the engine, opening a door, refuelling, driving a specified distance.

4. System according to any one of the preceding claims, **characterized in that** transmission of an acknowledgement by the control centre (3) can be stopped for a specific vehicle (4).

5. System according to any one of the preceding claims, **characterized in that** the vehicle apparatus (10 to 13) can moreover be disabled by the supervisory apparatus (5) upon receipt of a disable message transmitted by the control centre (3).

6. System according to any one of the preceding claims, **characterized in that** the message includes a changing subscriber number which has been notified to the supervisory apparatus (5) as part of a previous acknowledgement.

7. System according to any one of the preceding claims, **characterized in that** the disabling can be rescinded by input of a secret number.

8. System according to any one of the preceding claims, **characterized in that** a disk-type aerial, in particular an aerial integral with the windscreen, is used for transmitting and receiving.

9. System according to any one of the preceding claims, **characterized in that** the supervisory apparatus (5) is connected to the vehicle apparatus (10 to 18) in such a way that electrical separation causes the vehicle apparatus (10 to 13) to be disabled.

10. System according to any one of the preceding claims, **characterized in that** every last position of the vehicle (4) ascertained by origin-dependent routeing of the mobile radio network (1, 2) is stored and can be read out.

11. System according to any one of the preceding claims, **characterized in that** following an appropriate input, an emergency call is transmitted by the supervisory apparatus (5) over the mobile radio network (1, 2).

12. System according to any one of the preceding claims, **characterized by** facilities for inclusion of further mobile radio services such as for example traffic information, traffic routeing, mobile telephone and mobile facsimile.

## Revendications

1. Système pour protéger un véhicule contre une utilisation non autorisée pendant le functionnement du déplacement, selon lequel on dispose dans le véhicule (4) un dispositif de surveillance (5) qui comprend un émetteur/récepteur (7) pour un réseau radiotéléphonique mobile (1, 2) et un processeur (6), et qui est relié à au moins un dispositif de véhicule (10 a 13) nécessaire au fonctionnement du véhicule (4), notamment l'allumage, la pompe de carburant, le démarreur, de telle sorte que le fonctionnement du dispositif de véhicule (10 à 13) puisse être verrouille par le dispositif de surveillance (5),
**caractérisé en ce que** le dispositif de surveillance (5) pendant le functionnement du déplacement envoie de temps en temps un message ä un central (3) par l'intermédiaire du réseau mobile (1, 2) et verrouille le fonctionnement du dispositif de véhicule (10 a 13) 51 aucun accusé de réception n'est recu, les messages du dispositif de surveillance (5) contenant des informations sur un abonné utilisant le système, et les informations étant mises en mémoire dans une clé qui est nécessaire au fonctionnement du véhicule.

2. Système selon la revendication 1, **caractérisé en ce que** le verrouillage a lieu si aucun accusé de réception n'a été recu après un certain nombre d'événements de fonctionnement du véhicule (4).

3. Système selon la revendication 2, **caractérisé en ce qu'**un événement de fonctionnement est constitué par l'un au moins des événements suivants : démarrage du moteur, ouverture de la porte, ravitaillement, circulation sur un trajet prédéfini.

4. Système selon l'une des revendications précédentes, **caractérisé en ce que** l'émission d'un accusé de réception par le central (3) peut ètre interrompue pour un véhicule (4).

5. Systéme selon l'une des revendications précédentes, **caractérisé en ce que** le dispositif de véhicule (10 à 13) est également apte à ètre verrouille par
le dispositif de surveillance (5) lors de la réception d'un message de verrouillage émis par le central (3)

6. Système selon l'une des revendications précédentes, **caractérise en ce que** le message contient un 5 numéro d'abonné variable qui a été communiqué au dispositif de surveillance (5) dans le cadre d'un accusé de réception précédent.

7. Système selon l'une des revendications précédentes, **caractérisé en ce que** le verrouillage peut étre supprimé gràce à l'entrée d'un numéro secret.

8. Système selon l'une des revendications précédentes, **caractérisé en ce que** pour l'émission et la réception, on utilise une antenne de pare-brise, en particulier une antenne intégrée dans le pare-brise.

9. Système selon l'une des revendications précédentes, **caractérisé en ce que** le dispositif de surveillance (5) est relie au dispositif de véhicule (10 à13) de telle sorte qu'une déconnexion électrique entraine le verrouillage du dispositif de véhicule (10 à 13).

10. Système selon l'une des revendications précédentes, **caractérisé en ce que** la dernière position du véhicule (4) qui a été déterminée gràce a un routage du réseau mobile (1, 2) en fonction de l'origine est mise en mémoire et peut ètre consultée.

11. Système selon l'une des revendications précédentes, **caractérisé en ce que**, après une entrée adéquate, un message d'urgence est envoyé par le dispositif de surveillance (5) par l'intermédiaire du réseau mobile (1, 2)

12. Système selon l'une des revendications précédentes, **caractérisé en ce qu'**il peut être étendu à d'autres services radiotéléphoniques comme par exemple les informations routières, le routage, le téléphone mobile et la télécopie mobile.
